# EUROPEAN PATENT APPLICATION

(11) **EP 4 794 192 A1**
(43) Date of publication of application: **19.08.2026**
(21) Application number: 24895442.2
(22) Date of filing: 17.05.2024
(51) Int. Cl.: H02S 20/30, H02S 30/00, F24S 25/60, F16D 3/02

(54) **LOCKING STRUCTURE, PHOTOVOLTAIC SUPPORT AND PHOTOVOLTAIC SYSTEM**

(30) Priority: 30.11.2023 CN 202311620783
(71) Applicant: Trina Solar Co., Ltd, Changzhou, Jiangsu 213031 (CN)
(72) Inventor: XU, Baoqi, Changzhou, Jiangsu 213031 (CN); QIANG, Shengguan, Changzhou, Jiangsu 213031 (CN); QUAN, Peng, Changzhou, Jiangsu 213031 (CN); YAN, Kangcheng, Changzhou, Jiangsu 213031 (CN); LIU, Zhenbiao, Changzhou, Jiangsu 213031 (CN)
(74) Representative: Arnold & Siedsma
(86) International application number: PCT/CN2024/093970
(87) International publication number: WO 2025/112332

(57) **Abstract**

The present application relates to a locking structure, a photovoltaic support and a photovoltaic system. The locking structure comprises a box body (110), a driving member (120), a driven member (130) and a locking set. The locking set comprises at least two locking members (141) and an elastic member (142) connected between the two locking members (141), the locking members (141) being arranged between the box body (110) and the driven member (130). The elastic member (142) is used for driving the locking members (141) to be at locking positions, such that the locking members (141) at the locking positions prevent the driven member (130) from circumferentially rotating relative to the locking members (141). By means of push portions (122), the driving member (120) pushes the locking members (141) to deviate from the locking positions until a first engagement portion (121) abuts against a second engagement portion (1311), so as to drive the driven member (130) to rotate.

## Description

### CROSS-REFERENCE TO RELATED APPLICATIONS

This application claims priority to Chinese patent application No. 2023116207839, entitled "LOCKING DEVICE, PHOTOVOLTAIC SUPPORT AND PHOTOVOLTAIC SYSTEM" filed on November 30, 2023, the content of which is hereby incorporated by reference in its entirety.

### TECHNICAL FIELD

The present application relates to the field of photovoltaic technology, and in particular to a locking device, a photovoltaic bracket, and a photovoltaic system.

### BACKGROUND

In a photovoltaic power generation system, a photovoltaic module is mounted by using a photovoltaic bracket. The photovoltaic bracket can track the azimuth change of the sun, which enables a light-receiving surface of the photovoltaic module to receive solar radiation to a maximum extent, thereby realizing an increase in power generation.

Generally, the photovoltaic module is mounted on a main shaft of the photovoltaic bracket. A driving unit drives the main shaft to rotate, so as to change an orientation of the photovoltaic module. However, the main shaft cannot realize large torque transmission. Moreover, the main shaft is prone to torsional oscillation under the action of strong winds. Therefore, not only the photovoltaic power generation rate is affected, but also torsional damage to the main shaft is easily caused.

### SUMMARY

According to various embodiments of the present application, a locking device, a photovoltaic bracket, and a photovoltaic system are provided.

In a first aspect, the present application provides a locking structure, applied to a main shaft of a photovoltaic bracket, the locking structure including:
a housing;
a driving member, at least partially located in the housing, and provided with a first engaging portion and at least two toggle portions spaced apart along a circumferential direction of the driving member;
a driven member, at least partially located in the housing and provided with a second engaging portion, a first gap being provided between the first engaging portion and the second engaging portion in an engagement state along the circumferential direction;
a locking assembly, located between adjacent toggle portions, and including at least two locking members and an elastic member connected between the two locking members, the locking member being located between the housing and the driven member; the elastic member being configured to drive the locking member to be in a locked position, such that the locking member in the locked position blocks the driven member from rotating relative to the locking member along the circumferential direction; and
the driving member configured to be operably rotated, so as to push the locking member to deviate from the locked position through the toggle portion until the first engaging portion abuts against the second engaging portion to drive the driven member to rotate.

According to some embodiments of the present application, the first engaging portion includes an engaging block, and the second engaging portion includes an engaging groove configured to allow the engaging block to extend through.

According to some embodiments of the present application, the driven member includes a locking shaft and a driven shaft connected to the locking shaft, and the driven shaft is capable of being driven to rotate by the locking shaft.

According to some embodiments of the present application, the engaging groove is formed on the locking shaft, the driven shaft is configured with an insertion post, and the insertion post is configured to be engaged with the engaging groove.

According to some embodiments of the present application, the first engaging portion includes two engaging blocks, the two engaging blocks are spaced apart along the circumferential direction, and the two engaging blocks define an avoidance groove configured to allow the insertion post to extend through.

According to some embodiments of the present application, the first engaging portion is located in a central area of the driving member, and the second engaging portion is located in a central area of the driven member.

According to some embodiments of the present application, when the locking member is in the locked position, a second gap is provided between the locking member and the toggle portion along the circumferential direction, and the second gap is less than the first gap.

According to some embodiments of the present application, between the toggle portion and the elastic member adjacent thereto, along the circumferential direction, and along a direction from the elastic member to the toggle portion, a radial distance between the driven member and the housing gradually decreases;
when the locking member is in the locked position, the radial distance between the driven member and the housing is equal to a diameter of the locking member.

According to some embodiments of the present application, a first bearing is connected between an inner wall of the housing and the driving member;
a second bearing is connected between the inner wall of the housing and the driven member.

According to some embodiments of the present application, the driving member is configured with a first stepped groove, and the first bearing is located in the first stepped groove;
the driven member is configured with a second stepped groove, and the second bearing is located in the second stepped groove.

According to some embodiments of the present application, the locking structure further includes a first limiting member connected to the housing; and the first limiting member abuts against one side of the driving member along an axial direction of the driving member to restrict the driving member from moving along the axial direction of the driving member;
the locking structure further includes a second limiting member connected to the housing; and the second limiting member abuts against the driven member to restrict the driven member from moving along an axial direction of the driven member.

According to some embodiments of the present application, the first limiting member includes a first baffle connected to one side of the housing along an axial direction of the housing, and the first baffle abuts against one side of the driving member along the axial direction of the driving member; or
the first limiting member includes a first retaining ring connected to the inner wall of the housing, and the first retaining ring abuts against one side of the driving member along the axial direction of the driving member.

According to some embodiments of the present application, the second limiting member includes a second baffle connected to one side of the housing along an axial direction of the housing, and the second baffle abuts against one side of the driven member along the axial direction of the driven member; or
the second limiting member includes a second retaining ring connected to the inner wall of the housing, and the second retaining ring abuts against one side of the driven member along the axial direction of the driven member.

According to some embodiments of the present application, the housing includes a mounting base and a spacer sleeve sleeved in the mounting base, and at least portions of the locking assembly, the driving member, and the driven member are all connected to the spacer sleeve.

According to some embodiments of the present application, the first engaging portion in the engagement state abuts against the second engaging portion after deflecting by a preset angle along the circumferential direction.

In a second aspect, the present application provides a photovoltaic bracket.

The photovoltaic bracket according to the embodiments of the present application includes a first main shaft, a second main shaft, and the locking device as described above connected between the first main shaft and the second main shaft; and the first main shaft and the second main shaft are configured to mount a photovoltaic module.

In a third aspect, the present application further provides a photovoltaic system.

The photovoltaic system according to the embodiments of the present application includes the photovoltaic bracket as described above and a photovoltaic module mounted on the photovoltaic bracket.

The details of one or more embodiments of the present application are set forth in the accompanying drawings and the description below. Other features, objects, and advantages of the present application will become apparent from the description, drawings, and claims.

### BRIEF DESCRIPTION OF THE DRAWINGS

In order to illustrate the embodiments of the present application or conventional technologies more clearly, the drawings used in the description of specific embodiments or conventional technologies will be described briefly. Apparently, the following described drawings are merely for the embodiments of the present application, and other drawings can be derived based on these drawings by those of ordinary skill in the art without any creative effort.
FIG. 1 is a perspective view of a locking structure provided in an embodiment of the present application.
FIG. 2 is an exploded view of the locking structure shown in FIG. 1.
FIG. 3 is a partial schematic view of the locking structure shown in FIG. 1.
FIG. 4 is a schematic view of a locking shaft and a driven shaft in the locking structure shown in FIG. 3.
FIG. 5 is a schematic view of the locking structure shown in FIG. 1 at a first cross section.
FIG. 6 is a partial enlarged view at A in the locking structure shown in FIG. 5.
FIG. 7 is a cross-sectional view of the locking structure shown in FIG. 1 at a second cross section.
FIG. 8 is a schematic view of a photovoltaic bracket provided in an embodiment of the present application.

### Description of reference numerals:

10. photovoltaic bracket; 100. locking structure; 110. housing; 111. mounting base; 112. spacer sleeve; 120. driving member; 121. first engaging portion; 1211. engaging block; 1212. avoidance groove; 1213. first gap; 122. toggle portion; 123. first stepped groove; 130. driven member; 131. locking shaft; 1311. second engaging portion; 132. driven shaft; 1321. insertion post; 1322. second stepped groove; 141. locking member; 142. elastic member; 151. first bearing; 152. second bearing; 161. first limiting member; 1611. first baffle; 162. second limiting member; 1621. second baffle; 210. first main shaft; 220. second main shaft; 300. driving unit.

### DETAILED DESCRIPTION

The technical solutions of the present application will now be described in detail with reference to the embodiments in order to make clear and complete description. Obviously, the described embodiments are part of the embodiments of the present application, and not all of the embodiments. Based on the embodiments in the present application, all other embodiments obtained by those of ordinary skill in the art without creative efforts shall fall within the protection scope of the present application.

In order to facilitate the understanding of the embodiments, the embodiments will be described in detail below in conjunction with the accompanying drawings.

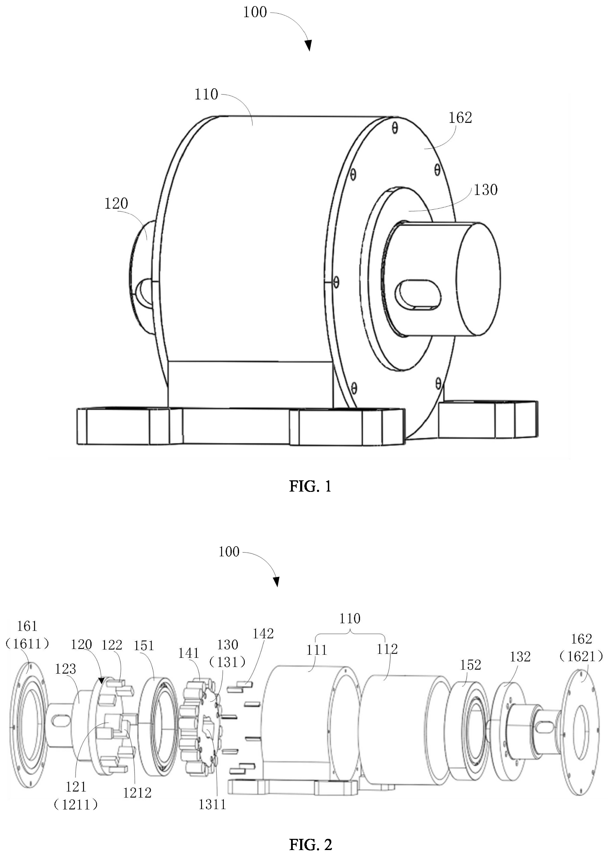

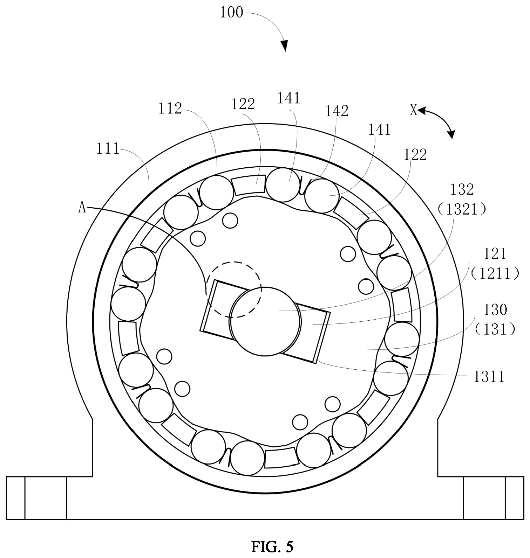

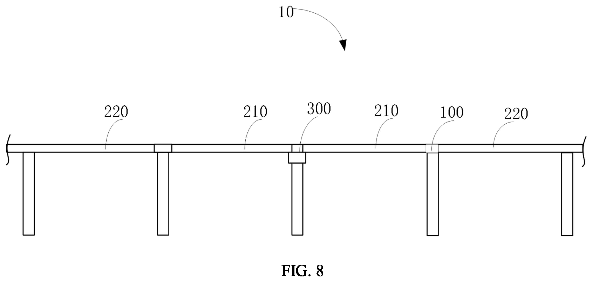

Referring to FIG. 1, FIG. 2, FIG. 5, and FIG. 6, a locking structure 100 provided in an embodiment of the present application is applied to a main shaft of a photovoltaic bracket 10 as shown in FIG. 8. The locking structure 100 includes a housing 110, a driving member 120, a driven member 130, and a locking assembly. At least a portion of the driving member 120 is located in the housing 110. The driving member 120 is provided with a first engaging portion 121 and at least two toggle portions 122 spaced apart along a circumferential direction. As shown in FIG. 5, the circumferential direction is illustrated by an arrow X. At least a portion of the driven member 130 is located in the housing 110. The driven member 130 is provided with a second engaging portion 1311. When the first engaging portion 121 and the second engaging portion 1311 are engaged with each other, a first gap 1213 is provided between the first engaging portion 121 and the second engaging portion 1311 along the circumferential direction. The locking assembly is located between the adjacent toggle portions 122. The locking assembly includes at least two locking members 141 and an elastic member 142 connected between the two locking members 141 distributed along the circumferential direction. The locking member 141 is located between the housing 110 and the driven member 130. The elastic member 142 is configured to drive the locking member 141 to be in a locked position, such that the locking member 141 in the locked position blocks the driven member 130 from rotating relative to the locking member 141 along the circumferential direction. The driving member 120 is configured to be operably rotated, so as to push the locking member 141 to deviate from the locked position through the toggle portion 122 until the first engaging portion 121 moves along the first gap 1213 to abut against the second engaging portion 1311 to drive the driven member 130 to rotate.

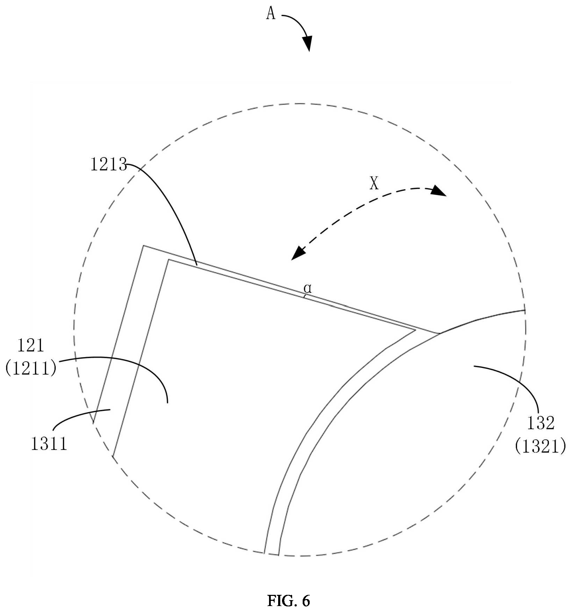

Taking the first engaging portion 121 at a left end shown in FIG. 5 and FIG. 6 as an example, it can be understood that an upper side and a lower side of the first engaging portion 121 along the circumferential direction respectively define the first gap 1213 with the driven member 130. When the first engaging portion 121 at the left end rotates clockwise from a position shown in FIG. 6 until the first gap 1213 on the upper side is eliminated, the upper side of the first engaging portion 121 at the left end can abut against the second engaging portion 1311 of the driven member 130. Correspondingly, the first gap 1213 between the lower side of the first engaging portion 121 at the left end and the driven member 130 is doubled. When the first engaging portion 121 at the left end rotates counterclockwise from the position shown in FIG. 6 until the first gap 1213 on the lower side is eliminated, the lower side of the first engaging portion 121 can abut against the second engaging portion 1311 of the driven member 130. Correspondingly, the first gap 1213 between the upper side of the first engaging portion 121 and the driven member 130 is doubled. It can be understood that, when the number of the first engaging portions 121 is two, the first engaging portion 121 at a right end is arranged oppositely relative to the first engaging portion 121 at the left end. That is, when the upper side of the first engaging portion 121 at the left end abuts against the second engaging portion 1311 of the driven member 130, the lower side of the first engaging portion 121 at the right end abuts against the second engaging portion 1311 of the driven member 130.

As shown in FIG. 2, FIG. 5, and FIG. 8, when the locking structure 100 is applied to the photovoltaic bracket 10, the driving member 120 and an input main shaft of the photovoltaic bracket 10 can be connected through fasteners such as screws, and the driven member 130 is connected to an output main shaft of the photovoltaic bracket 10. When the photovoltaic bracket 10 operates normally, rotational power of a driving unit 300 is transmitted to the driving member 120 through the input main shaft. The driving member 120 drives the locking member 141 to move through the toggle portion 122 to deviate from the locked position. At this time, when the rotational power of the driving unit 300 acts on the driving member 120 and the driven member 130, the locking member 141 no longer limits rotation of the driven member 130. As the driving member 120 continues to rotate until the first gap 1213 on a single side is eliminated, the first engaging portion 121 abuts against the second engaging portion 1311, so that both the locking member 141 and the driven member 130 can be driven by the driving member 120 and synchronously rotate. Thus, the rotational power is transmitted to the output main shaft connected to the driven member 130, thereby realizing synchronous co-rotation of a plurality of main shafts, further ensuring orientation consistency of a plurality of photovoltaic modules (not shown in the figures), and ensuring a photovoltaic power generation rate. During a power transmission process, since the driving member 120 and the driven member 130 realize torque transmission through rigid contact between the two engaging portions, the force transmission effect is more stable. Moreover, large torque transmission can be realized, adapting to actual use requirements.

It can be understood that, during a process in which the driving member 120 continues to rotate until the first engaging portion 121 and the second engaging portion 1311 abut against each other, the locking member 141 moves gradually away from the locked position. Correspondingly, a compression amount of the elastic member 142 gradually increases, and the compression amount is less than a maximum compression amount of the elastic member 142, ensuring subsequent use reliability of the elastic member 142.

As shown in FIG. 2, FIG. 5, and FIG. 8, when a wind load acts on the output main shaft, the output main shaft undergoes torsional deformation, and the driven member 130 is driven to generate a slight movement. Even if the slight movement generated by the driven member 130 drives the locking member 141 to generate a slight movement, since the elastic member 142 is provided between the adjacent locking members 141, the locking member 141 quickly returns to the locked position under action of the elastic member 142. Therefore, the driven member 130 cannot continue to rotate relative to the locking member 141, and thus the second engaging portion 1311 cannot abut against the first engaging portion 121. Thus, a torque of the output main shaft cannot be transmitted to the input main shaft connected to the driving member 120. The torque is blocked at the locking structure 100, thereby reducing the possibility of damage caused by twisting of the input main shaft, improving anti-torsion performance and service life of the photovoltaic bracket 10, and thus ensuring the photovoltaic power generation rate.

In present embodiments, taking each locking assembly including two locking members 141 as an example, by providing two locking members 141 between two toggle portions 122 to cooperate with the two toggle portions 122, one locking member 141 is configured to limit the driven member 130 from rotating clockwise, and another locking member 141 is configured to limit the driven member 130 from rotating counterclockwise. As such, locking in two directions can be realized respectively through the two locking members 141, improving use reliability of the locking structure 100. Through the locking structure cooperating with the driving unit, torque maintaining points of the photovoltaic bracket are increased from one to multiple, which allows the wind resistance capability of the entire photovoltaic bracket to be significantly improved. It can be understood that, in other embodiments, the number of the locking members in each locking assembly can also be greater than two, that is, the number of the locking members is 2N, where N is a positive integer. During use, the number of the locking members can be set according to actual needs.

Through the configuration of the elastic member 142, when a slight deviation occurs between the locking member 141 and the driven member 130, the elastic member 142 can quickly act on the locking member 141 to keep the locking member in the locked position, so as to ensure a locking effect of the locking structure 100. The toggle portion 122 can be a pawl. The locking member 141 can be a roller. The elastic member 142 can be a V-shaped paddle.

As shown in FIG. 5, in some embodiments, a plurality of locking assemblies and a plurality of toggle portions 122 are provided. Furthermore, the plurality of locking assemblies and the plurality of toggle portions 122 are alternately arranged along the circumferential direction. By providing the plurality of locking assemblies and the plurality of toggle portions 122, a contact area between the locking assemblies and the driven member 130 is increased, which improves locking accuracy and use reliability of the locking structure 100.

Referring to FIG. 2 and FIG. 5, in an embodiment, the first engaging portion 121 includes an engaging block 1211. The second engaging portion 1311 includes an engaging groove (not shown in the figures) configured to allow the engaging block 1211 to extend through. Furthermore, a width of the engaging groove along the circumferential direction is greater than a width of the engaging block 1211 along the circumferential direction, so that the driving member 120 needs to rotate by a certain angle before the engaging block 1211 abuts against a groove wall of the engaging groove, thereby ensuring that the locking member 141 can have a sufficient travel to deviate from the locked position. In some embodiments, the engaging block 1211 is a square block, and the engaging groove is a square groove. Through engaging cooperation between the engaging block 1211 and the engaging groove, a torque of the driving member 120 is transmitted to the driven member 130, realizing transmission of power. In other embodiments, the driving member can be provided with the engaging groove, and the driven member can be provided with the engaging block, etc.

As shown in FIG. 5 and FIG. 6, in an embodiment, the first engaging portion 121 in an engagement state deflects by a preset angle α along the circumferential direction, and then abuts against the second engaging portion 1311. The deflection angle α is less than 1 degree. The locking structure 100 is applied to the main shaft of the photovoltaic bracket 10, and the main shaft is configured to mount the photovoltaic module. Thus, if the preset angle α is too large, the first gap 1213 defined between the first engaging portion 121 and the second engaging portion 1311 will be relatively large, which causes a difference between installation angles of the driving member 120 and the driven member 130 to be relatively large. As such, a difference between inclination angles of the photovoltaic modules mounted on two adjacent main shafts is relatively large. That is, an included angle between planes where the adjacent photovoltaic modules are located increases. On one hand, non-alignment of the photovoltaic modules affects an aesthetic effect. On the other hand, it will also lead to a situation that some photovoltaic modules may not be fully oriented toward the sun, thereby affecting power generation efficiency of some photovoltaic modules. Therefore, by setting an appropriate preset angle α, the locking member 141 can be ensured to have a sufficient travel to deviate from the locked position, while ensuring aesthetic degree and power generation efficiency.

Referring to FIG. 2, FIG. 4, and FIG. 7, in an embodiment, the driven member 130 includes a locking shaft 131 and a driven shaft 132 connected to the locking shaft 131. The driven shaft 132 can be driven to rotate by the locking shaft 131. In some embodiments, the locking shaft 131 and the driven shaft 132 can be threadedly connected. The locking shaft 131 and the driven shaft 132 are respectively provided with threaded holes, and are connected through a bolt. Thus, the torque transmitted from the driving member 120 to the locking shaft 131 is then transmitted to the driven shaft 132.

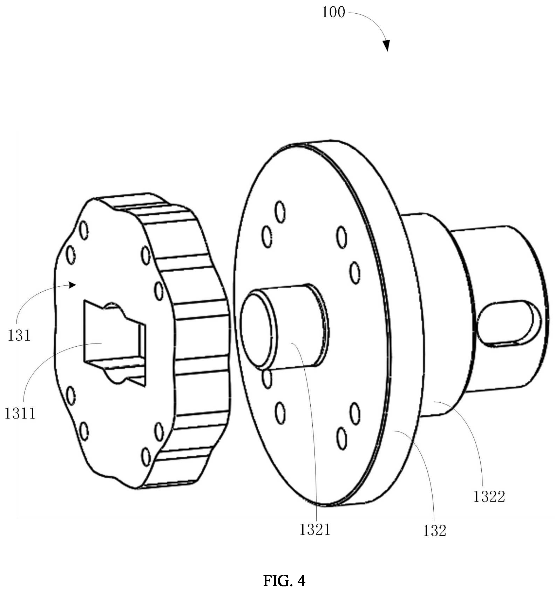

As shown in FIG. 2 and FIG. 4, in an embodiment, the engaging groove is formed on the locking shaft 131. The driven shaft 132 is configured with an insertion post 1321. The insertion post 1321 is configured to be engaged with the engaging groove. As such, coaxiality of the driven shaft 132 and the locking shaft 131 can be ensured, which enables the locking structure 100 to withstand a larger bending moment, thereby ensuring stability of power transmission.

As shown in FIG. 2 and FIG. 5, in an embodiment, the first engaging portion includes two engaging blocks 1211. The two engaging blocks 1211 are spaced apart along the circumferential direction. The two engaging blocks 1211 define an avoidance groove 1212 configured to allow the insertion post 1321 to extend through. That is to say, the driving member 120 and the driven shaft 132 are connected through the avoidance groove 1212 and the insertion post 1321. Through such a configuration, coaxiality of the driving member 120 and the driven shaft 132 is ensured, so that the locking structure can withstand a larger bending moment, stability of power transmission is improved, and locking performance of the locking structure 100 is improved.

As shown in FIG. 2, FIG. 4, and FIG. 5, in an embodiment, the first engaging portion 121 is located in a central area of the driving member 120. The second engaging portion 1311 is located in a central area of the driven member 130. In some embodiments, as an example, the first engaging portion 121 is the engaging block 1211, the second engaging portion 1311 is the engaging groove, and the driving member 120 includes the locking shaft 131 and a driving shaft described above. Correspondingly, the insertion post 1321 is also located in a central area of the driven shaft 132. By providing cooperating structures such as the engaging portions and the insertion post 1321 in the central areas of the respective components, coaxiality among the driving member 120, the locking shaft 131, and the driven shaft 132 is ensured, which not only can ensure stability of torque transmission, but also can increase anti-torsion performance of the locking structure 100. When the cooperating structures are applied to the photovoltaic bracket 10 as shown in FIG. 8, anti-torsion performance of the photovoltaic bracket 10 is correspondingly increased, improving use reliability of the photovoltaic bracket 10.

As shown in FIG. 5 and FIG. 6, in an embodiment, when the locking member 141 is in the locked position, a second gap is provided between the locking member 141 and the toggle portion 122 along the circumferential direction. The second gap is less than the first gap 1213. That is to say, when the driving member 120 rotates by a first angle, the toggle portion 122 first moves to abut against the locking member 141. Only when the driving member 120 continues to rotate to a second angle, the first engaging portion 121 abuts against the second engaging portion 1311. Through such a configuration, the locking member 141 can be ensured to have a sufficient travel to deviate from the locked position, thereby ensuring power transmission between the driving member 120 and the driven member 130.

As shown in FIG. 5, in an embodiment, between the toggle portion 122 and the elastic member 142 adjacent thereto, along the circumferential direction, and along a direction from the elastic member 142 to the toggle portion 122, a radial distance between the driven member 130 and the housing 110 gradually decreases. Furthermore, when the locking member 141 is in the locked position, the radial distance between the driven member 130 and the housing 110 is equal to a diameter of the locking member 141. That is to say, an outer surface of the driven member 130 is an irregular-shaped transitional arc surface. Through such a variable diameter configuration, the housing 110 and the driven member 130 cooperate to restrict the locking member 141 in the locked position unable to move towards a smaller gap. That is, the locking member 141 cannot move along a direction approaching the toggle portion 122. It is precisely because movement of the locking member 141 is restricted, torsion of the driven member 130 can be further restricted. That is, power of the driven member 130 cannot be transmitted to the driving member 120, realizing blocking of torque.

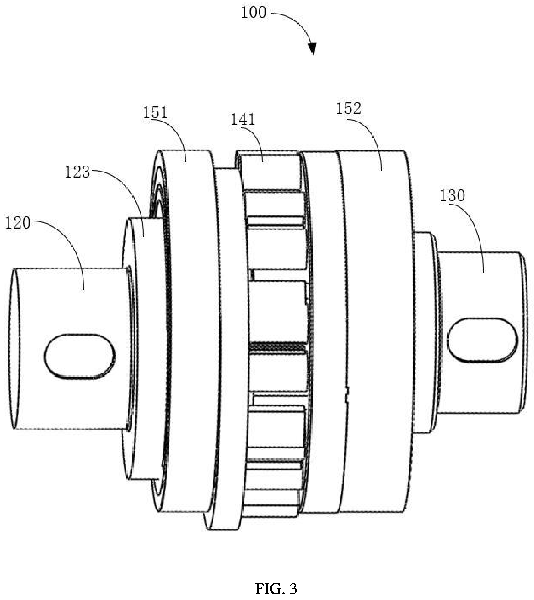

As shown in FIG. 2, FIG. 3, and FIG. 7, in an embodiment, a first bearing 151 is connected between an inner wall of the housing 110 and the driving member 120. Since the driving member 120 generates rotational movement relative to the housing 110 when the photovoltaic bracket 10 operates normally, by providing the first bearing 151 between the driving member 120 and the inner wall of the housing 110, a direct contact between the driving member 120 and the housing 110, which leads to wear, can be prevented, thereby extending service life of the locking structure 100. Further, a second bearing 152 is connected between the inner wall of the housing 110 and the driven member 130. By providing the first bearing 151 and the second bearing 152, on one hand, anti-torsion capability of the main shaft can be improved, thereby ensuring coaxial rotation between the driving member 120 and the driven member 130; on the other hand, frictional wear of the driving member 120 and the driven member 130 with the housing 110 can be reduced, thereby extending the service life of the locking structure 100. The first bearing 151 and the first bearing 151 can be deep groove ball bearings or roller bearings.

As shown in FIG. 2 to FIG. 4, in an embodiment, the driving member 120 is configured with a first stepped groove 123. The first bearing 151 is located in the first stepped groove 123. The driven member 130 is configured with a second stepped groove 1322. The second bearing 152 is located in the second stepped groove 1322. Stepped grooves are respectively provided on the driving member 120 and the driven member 130, which not only facilitates assembly of the bearings, but also can reduce an occupied space of the driving member 120 and the first bearing 151 along a radial direction, making the structure of the locking structure 100 more compact.

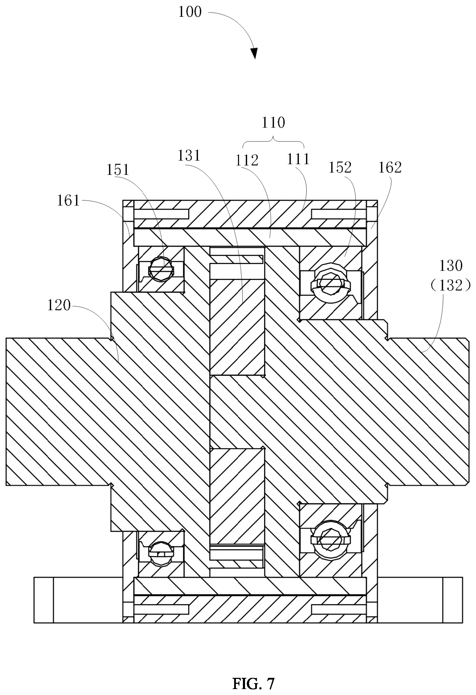

As shown in FIG. 2 and FIG. 7, in an embodiment, the locking structure 100 further includes a first limiting member 161 connected to the housing 110. The first limiting member 161 abuts against one side of the driving member 120 along an axial direction of the driving member 120, thereby restricting the driving member 120 from moving along the axial direction of the driving member 120. By restricting the axial movement of the input member 120, the possibility that the toggle portion 122 can not abut against the locking member 141 due to deviation of the driving member 120 is reduced, thereby ensuring the reliability of torque transmission.

As shown in FIG. 1, FIG. 2, and FIG. 7, in some embodiments, the first limiting member 161 includes a first baffle 1611 connected to one side of the housing 110 along an axial direction of the housing 110. The first baffle 1611 abuts against one side of the driving member 120 along the axial direction of the driving member 120. The first baffle 1611 and the housing 110 can be connected by fasteners such as screws. As such, sealing performance of the entire locking structure 100 is better. In other embodiments, the first limiting member includes a first retaining ring connected to the inner wall of the housing. The first retaining ring abuts against one side of the driving member along the axial direction of the driving member, and abuts against one side of the first bearing.

As shown in FIG. 1, FIG. 2, and FIG. 5, in some embodiments, the locking structure 100 further includes a second limiting member 162 connected to the housing 110. The second limiting member 162 abuts against the driven member 130, so as to restrict the driven member 130 from moving along an axial direction of the driven member 130. By restricting axial movement of the driven member 130, the possibility of affecting locking accuracy due to deviation of the driven member 130 is reduced, thereby ensuring anti-torsion performance.

In some embodiments, as shown in FIG. 2 and FIG. 5, the second limiting member 162 includes a second baffle 1621 connected to one side of the housing 110 along an axial direction of the housing 110. The second baffle 1621 abuts against one side of the driven member 130 along the axial direction of the driven member 130. The second baffle 1621 and the housing 110 can be connected by fasteners such as screws. In other embodiments, the second limiting member includes a second retaining ring connected to the inner wall of the housing. The second retaining ring abuts against one side of the driven member along the axial direction of the driven member, and abuts against one side of the first bearing.

As shown in FIG. 2 and FIG. 7, in an embodiment, the housing 110 includes a mounting base 111 and a spacer sleeve 112 sleeved in the mounting base 111. At least portions of the locking assembly, the driving member 120, and the driven member 130 are all connected to the spacer sleeve 112. By providing the spacer sleeve 112, on one hand, the spacer sleeve 112 plays a sealing role; on the other hand, it plays a role of installation and fixation, which prevents components such as the locking member 141 from easily sliding out, thereby improving use reliability of the locking structure 100.

As shown in FIG. 8, an embodiment of the present application further provides a photovoltaic bracket 10. The photovoltaic bracket 10 includes a first main shaft 210, a second main shaft 220, and the locking structure 100 connected between the first main shaft 210 and the second main shaft 220. The first main shaft 210 and the second main shaft 220 are configured to mount a photovoltaic module.

When the locking structure is applied to the photovoltaic bracket, the driving member 120 and the first main shaft 210 of the photovoltaic bracket can be connected through fasteners such as screws, and the driven member 130 is connected to the second main shaft 220 of the photovoltaic bracket. Therefore, there is no need to additionally provide bearing assemblies or the like between the first main shaft 210 and the second main shaft 220 to realize power transmission. It can be understood that, the photovoltaic bracket further includes a driving unit 300. The first main shaft 210 is connected to an output end of the driving unit 300.

When the photovoltaic bracket operates normally, rotational power of the driving unit 300 is transmitted to the second main shaft 220 through the first main shaft 210 and the locking structure, which realizes the synchronous co-rotation of the first main shaft 210 and the second main shaft 220, thereby ensuring the orientation consistency of the plurality of photovoltaic modules mounted on the first main shaft 210 and the second main shaft 220, and ensuring the photovoltaic power generation efficiency. When the wind load acts on the second main shaft 220, the torque is blocked at the locking device, which reduces the risk of the torque being transmitted to the driving unit 300 through the first main shaft 210 and affecting its use reliability, improving the anti-torsion performance of the photovoltaic bracket, and thereby ensuring the photovoltaic power generation rate. Through the cooperation of the locking device and the driving unit, the torque maintaining points of the photovoltaic bracket are increased from one to multiple. As such, the wind resistance capability of the entire photovoltaic bracket is significantly improved.

In some embodiments, the present application further provides a photovoltaic system (not shown in the figures). The photovoltaic system includes the aforementioned photovoltaic bracket 10 and a photovoltaic module (not shown in the figures) mounted to the photovoltaic bracket. The photovoltaic system includes the aforementioned photovoltaic bracket 10, and thus it not only can realize the transmission of power, but also can improve the anti-torsion performance of the photovoltaic bracket, thereby improving the use reliability of the photovoltaic system.

It should be noted that similar reference numerals and letters indicate similar items in the following drawings. Therefore, once an item is defined in one drawing, it does not need to be further defined and explained in subsequent drawings.

In addition, if the terms "first" and "second" appear, these terms are only used for purpose of description, and cannot be understood as indicating or implying relative importance or implicitly indicating the number of the indicated technical features. Therefore, a feature defined by "first" or "second" may explicitly or implicitly include at least one such feature. In the description of the present application, if the term "a plurality of" appears, "a plurality of' means at least two, such as two, three, etc., unless otherwise defined explicitly and specifically.

In addition, in the description of the embodiments of the present application, unless otherwise clearly specified and defined, the terms "installed", "connected", "coupled", "fixed" and the like should be understood broadly. For example, an element, when being referred to as being "mounted", "connected", "coupled", or "fixed" to another element, unless otherwise specifically defined, may be fixedly connected, detachably connected, or integrated to the other element, may be mechanical connected or electrically connected to the other element, and may be directly connected to the other element or connected to the other element via an intermediate medium, or may be internal communication between two elements. For those skilled in the art, the specific meanings of the above terms in the present application can be understood according to specific circumstances.

In the description of the present application, it should be understood that the terms "center", "up", "down", "left", "right", "vertical", "horizontal", "inner", "outer", etc. indicate the orientations or positional relationships on the basis of the drawings. These terms are only for the convenience of describing the present application and simplifying the description, rather than indicating or implying that the related devices or element must have the specific orientations, or be constructed or operated in the specific orientations, and therefore cannot be understood as limitations of the present application. In addition, the terms "first", "second", and "third" are only used for descriptive purposes, and cannot be understood as indicating or implying relative importance.

Finally, it should be noted that the above embodiments are only used to illustrate the technical solutions of the present application, rather than limiting them. Although the present application has been described in detail with reference to the foregoing embodiments, those of ordinary skill in the art should understand that they can still modify the technical solutions described in the foregoing embodiments, or make equivalent substitutions for some or all of the technical features therein. These modifications or substitutions do not make the essence of the corresponding technical solutions depart from the scope of the technical solutions of the embodiments of the present application.

## Claims

1. A locking structure, applied to a main shaft of a photovoltaic bracket (10), comprising:
a housing (110);
a driving member (120), at least partially located in the housing (110), and provided with a first engaging portion (121) and at least two toggle portions (122) spaced apart along a circumferential direction of the driving member (120);
a driven member (130), at least partially located in the housing (110) and provided with a second engaging portion (1311), a first gap (1213) being provided between the first engaging portion (121) and the second engaging portion (1311) in an engagement state along the circumferential direction;
a locking assembly, located between adjacent toggle portions (122), and comprising at least two locking members (141) and an elastic member (142) connected between the two locking members (141), the locking member (141) being located between the housing (110) and the driven member (130; the elastic member (142) being configured to drive the locking member (141) to be in a locked position, such that the locking member (141) in the locked position blocks the driven member (130) from rotating relative to the locking member (141) along the circumferential direction; and
the driving member (120) configured to be operably rotated, so as to push the locking member (141) to deviate from the locked position through the toggle portion (122) until the first engaging portion (121) abuts against the second engaging portion (1311) to drive the driven member (130) to rotate.

2. The locking structure according to claim 1, wherein the first engaging portion (121) comprises an engaging block (1211), and the second engaging portion (1311) comprises an engaging groove configured to allow the engaging block (1211) to extend through.

3. The locking structure according to claim 2, wherein the driven member (130) comprises a locking shaft (131) and a driven shaft (132) connected to the locking shaft (131), and the driven shaft (132) is capable of being driven to rotate by the locking shaft (131).

4. The locking structure according to claim 3, wherein the engaging groove is formed on the locking shaft (131), the driven shaft (132) is configured with an insertion post (1321), and the insertion post (1321) is configured to be engaged with the engaging groove.

5. The locking structure according to claim 4, wherein the first engaging portion (121) comprises two engaging blocks (1211), the two engaging blocks (1211) are spaced apart along the circumferential direction, and the two engaging blocks (1211) define an avoidance groove (1212) configured to allow the insertion post (1321) to extend through.

6. The locking structure according to claim 1, wherein the first engaging portion (121) is located in a central area of the driving member (120), and the second engaging portion (1311) is located in a central area of the driven member (130).

7. The locking structure according to claim 1, wherein when the locking member (141) is in the locked position, a second gap is provided between the locking member (141) and the toggle portion (122) along the circumferential direction, and the second gap is less than the first gap (1213).

8. The locking structure according to claim 7, wherein between the toggle portion (122) and the elastic member (142) adjacent thereto, along the circumferential direction, and along a direction from the elastic member (142) to the toggle portion (122), a radial distance between the driven member (130) and the housing (110) gradually decreases;
when the locking member (141) is in the locked position, the radial distance between the driven member (130) and the housing (110) is equal to a diameter of the locking member (141).

9. The locking structure according to claim 1, wherein a first bearing (151) is connected between an inner wall of the housing (110) and the driving member (120);
a second bearing (152) is connected between the inner wall of the housing (110) and the driven member (130).

10. The locking structure according to claim 9, wherein the driving member (120) is configured with a first stepped groove (123), and the first bearing (151) is located in the first stepped groove (123);
the driven member (130) is configured with a second stepped groove (1322), and the second bearing (152) is located in the second stepped groove (1322).

11. The locking structure according to claim 1, wherein the locking structure further comprises a first limiting member (161) connected to the housing (110); and the first limiting member (161) abuts against one side of the driving member (120) along an axial direction of the driving member (120) to restrict the driving member (120) from moving along the axial direction of the driving member (120);
the locking structure further comprises a second limiting member (162) connected to the housing (110); and the second limiting member (162) abuts against the driven member (130) to restrict the driven member (130) from moving along an axial direction of the driven member (130).

12. The locking structure according to claim 11, wherein the first limiting member (161) comprises a first baffle (1611) connected to one side of the housing (110) along an axial direction of the housing (110), and the first baffle (1611) abuts against one side of the driving member (120) along the axial direction of the driving member (120); or
the first limiting member comprises a first retaining ring connected to the inner wall of the housing, and the first retaining ring abuts against one side of the driving member along the axial direction of the driving member.

13. The locking structure according to claim 11, wherein the second limiting member (162) comprises a second baffle (1621) connected to one side of the housing (110) along an axial direction of the housing (110), and the second baffle (1621) abuts against one side of the driven member (130) along the axial direction of the driven member (130); or
the second limiting member comprises a second retaining ring connected to the inner wall of the housing, and the second retaining ring abuts against one side of the driven member along the axial direction of the driven member.

14. The locking structure according to claim 1, wherein the housing (110) comprises a mounting base (111) and a spacer sleeve (112) sleeved in the mounting base (111), and at least portions of the locking assembly, the driving member (120), and the driven member (130) are all connected to the spacer sleeve (112).

15. The locking structure according to claim 1, wherein the first engaging portion (121) in the engagement state abuts against the second engaging portion (1311) after deflecting by a preset angle along the circumferential direction.

16. A photovoltaic bracket, comprising a first main shaft (210), a second main shaft (220), and the locking structure according to any one of claims 1 to 15 connected between the first main shaft (210) and the second main shaft (220), wherein the first main shaft (210) and the second main shaft (220) are configured to mount a photovoltaic module.

17. A photovoltaic system, comprising the photovoltaic bracket (10) according to claim 16 and a photovoltaic module mounted on the photovoltaic bracket (10).
